# EUROPEAN PATENT APPLICATION

(11) **EP 4 703 621 A1**
(43) Date of publication of application: **04.03.2026**
(21) Application number: 25175444.6
(22) Date of filing: 09.05.2025
(51) Int. Cl.: F16M 11/24

(54) **SUPPORT AND SHOOTING AUXILIARY APPARATUS**

(30) Priority: 26.08.2024 CN 202411178953
(71) Applicant: Winners' Sun Plastic & Electronic (Shenzhen) Co., Ltd., Shenzhen Guangdong 518000 (CN)
(72) Inventor: Peng, Yibing, Shenzhen (CN); Yue, Qing, Shenzhen (CN); Wu, Zhiliang, Shenzhen (CN)
(74) Representative: Mirlach, Xiaolu

(57) **Abstract**

This application relates to the technical field of shooting auxiliary equipment, and specifically relates to a support and a shooting auxiliary apparatus. The support includes a main rod (10), a supporting foot base (20), and supporting components (30). The supporting component includes a supporting foot (31) and a supporting rib (32). One end of the supporting rib is provided with a first rotating shaft (321). The supporting foot includes a first installing part (311) and a second installing part (312). The first installing part includes a first retaining wall (3112) and a second retaining wall (3113). The second installing part includes a third retaining wall (3122) and a fourth retaining wall (3123). The first retaining wall and the second retaining wall form, through enclosure, a first installation space (3111) at which the first rotating shaft is inserted. The third retaining wall and the fourth retaining wall form, through enclosure, a second installation space (3121) at which the first rotating shaft is inserted. A rotating connection structure disposed for the supporting foot and the supporting rib in this application is simpler, so that installation steps are simplified, and production costs are reduced.

## Description

### FIELD OF TECHNOLOGY

This application relates to the technical field of shooting auxiliary equipment, and in particular to a support and a shooting auxiliary apparatus.

### BACKGROUND

With the popularization of a shooting function of smart phones and cameras, shooting is required in an increasing number of scenes in daily life, and devices such as self-shooting apparatuses and tripod heads have also emerged. Most of the self-shooting apparatuses and handheld tripod heads in the prior art are provided with shooting auxiliary supports, and one support is usually provided with at least three supporting feet that can be opened and closed. To enhance the stability of the support, supporting ribs are usually provided on the supporting feet, and two ends of the supporting ribs are respectively rotatably connected to the supporting feet and a rod body.

In a manner in which the supporting ribs are rotatably connected to the supporting feet, the support further includes a limiting part, the limiting part is detachably connected to the supporting feet, to jointly limit a rotating connecting groove with the supporting feet. When the supporting ribs are installed, the supporting ribs are first installed in the rotating connecting groove, and then the limiting part is installed on the supporting feet, so that ends of the supporting ribs are quickly and easily limited in the rotating connecting groove, and a rotating connection between the supporting ribs and the supporting feet is completed.

However, in the above structure, installation of the limiting part is time-consuming and laborious, and a mold needs to be separately provided for the limiting part, increasing support costs.

### SUMMARY

A technical problem to be solved by embodiments of this application is that a support and a shooting auxiliary apparatus are provided to resolve a problem of great costs caused by a difficulty in installing a supporting rib and a complicated connection structure.

According to a third aspect, an embodiment of this application provides a support, including:
a main rod;
a supporting foot base, sleeved on the main rod; and
a supporting component, including a supporting foot and a supporting rib, where the supporting foot is rotatably connected to the supporting foot base, one end of the supporting rib is capable of rotating relative to the main rod, the other end is rotatably connected to the supporting foot, one end of the supporting rib is provided with a first rotating shaft, the supporting rib is rotatably connected to the supporting foot through the first rotating shaft, the supporting foot includes a first installing part and a second installing part arranged at an interval in a width direction of the supporting foot, the first installing part includes a first retaining wall and a second retaining wall, the second installing part includes a third retaining wall and a fourth retaining wall, the second retaining wall and the fourth retaining wall are evenly arranged at an interval in a length direction and the width direction of the supporting foot, the first rotating shaft is sandwiched between the second retaining wall and the fourth retaining wall in the length direction of the supporting foot, the first retaining wall and the second retaining wall form, through enclosure, first installation space at which the first rotating shaft is inserted, and the third retaining wall and the fourth retaining wall form, through enclosure, second installation space at which the first rotating shaft is inserted.

In an embodiment, the first retaining wall and the second retaining wall are integrally formed, and/or the third retaining wall and the fourth retaining wall are integrally formed.

In an embodiment, the second retaining wall and the fourth retaining wall are disposed to be in a shape that is matched with an outer side profile of the first rotating shaft.

In an embodiment, the first retaining wall and the second retaining wall are arranged at an interval, and the interval between the first retaining wall and the second retaining wall is less than a diameter of the first rotating shaft; and/or the third retaining wall and the fourth retaining wall are arranged at an interval, and the interval between the third retaining wall and the fourth retaining wall is less than the diameter of the first rotating shaft.

In an embodiment, when the first rotating shaft is sandwiched between the second retaining wall and the fourth retaining wall in the length direction of the supporting foot, an axial direction of the first rotating shaft is perpendicular to the length direction of the supporting foot.

In an embodiment, an interval between the second retaining wall and the fourth retaining wall in the length direction of the supporting foot is 1 to 1.2 times a diameter of the first rotating shaft.

In an embodiment, the supporting rib is made of an elastic material, after one end of the supporting rib is connected to the main rod, the supporting rib is twisted within a torsional angle range of the supporting rib to drive the first rotating shaft to be detached from the first installation space and the second installation space.

In an embodiment, the supporting foot is provided with an accommodating groove, the supporting rib is capable of being accommodated in the accommodating groove, and the first installation space and the second installation space communicate with the accommodating groove.

In an embodiment, the first retaining wall, the second retaining wall, and a bottom of the accommodating groove form, through enclosure, the first installation space at which the first rotating shaft is inserted, and the third retaining wall, the fourth retaining wall, and the bottom of the accommodating groove form, through enclosure, the second installation space at which the first rotating shaft is inserted.

According to a second aspect, an embodiment of this application further provides a shooting auxiliary apparatus, including the support in the above embodiments and an electronic device fastening apparatus connected to the top end of the main rod.

Compared with the prior art, the support and the shooting auxiliary apparatus provided in the embodiments of this application have the following beneficial effects. A rotating connection structure disposed for the supporting foot and the supporting rib in this application is simpler, so that installation steps are simplified, and production costs are reduced.

Specifically, because the first rotating shaft of the supporting rib is sandwiched between the second retaining wall and the fourth retaining wall in the length direction of the supporting foot, and the first rotating shaft is retained by the first retaining wall and the third retaining wall separately, to prevent the first rotating shaft from detaching from the supporting foot in the directions of the first retaining wall and the third retaining wall. Therefore, the supporting rib can be installed on the supporting foot without a limiting part to be provided in the structure.

### BRIEF DESCRIPTION OF THE DRAWINGS

Specific implementations of this application are further described in detail with reference to accompanying drawings and embodiments. In the figures,
FIG. 1 is a first schematic three-dimensional diagram of a support according to an embodiment of this application;
FIG. 2 is a second schematic three-dimensional diagram of a support according to an embodiment of this application;
FIG. 3 is a schematic locally enlarged diagram of a position A in FIG. 2;
FIG. 4 is a schematic three-dimensional diagram of a supporting foot according to an embodiment of this application;
FIG. 5 is a schematic three-dimensional diagram of FIG. 4 from another viewing angle;
FIG. 6 is a first schematic diagram of assembly of supporting feet and supporting ribs according to an embodiment of this application; and

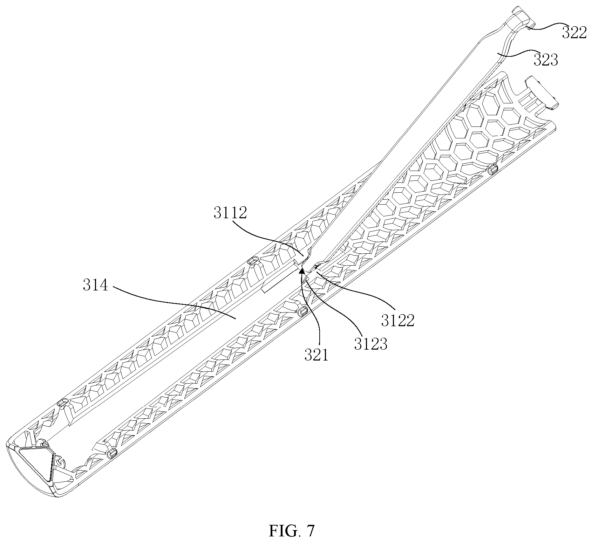

FIG. 7 is a second schematic diagram of assembly of supporting feet and supporting ribs according to an embodiment of this application.

Reference numerals in the accompanying drawings:
1000. support;
10. main rod;
20. supporting foot base;
30. supporting component; 31. supporting foot; 311. first installing part; 3111. first installation space; 3112. first retaining wall; 3113, second retaining wall; 312. second installing part; 3121. second installation space; 3122. third retaining wall; 3123. fourth retaining wall; 313. inner side wall; 314. accommodating groove; 32. supporting rib; 321. first rotating shaft; 322. second rotating shaft; 323. body;
40. sleeve.

### DESCRIPTION OF THE EMBODIMENTS

It should be noted that embodiments in this application and the features in embodiments may be mutually combined in the case of no conflict. Preferred embodiments of this application are described in detail in combination with accompanying drawings.

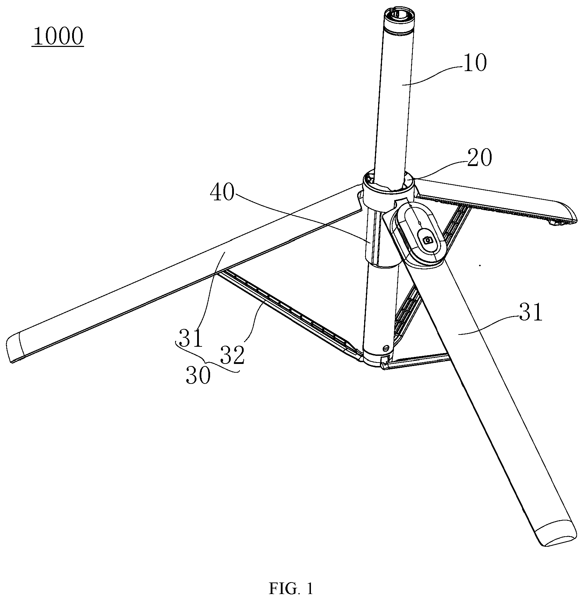

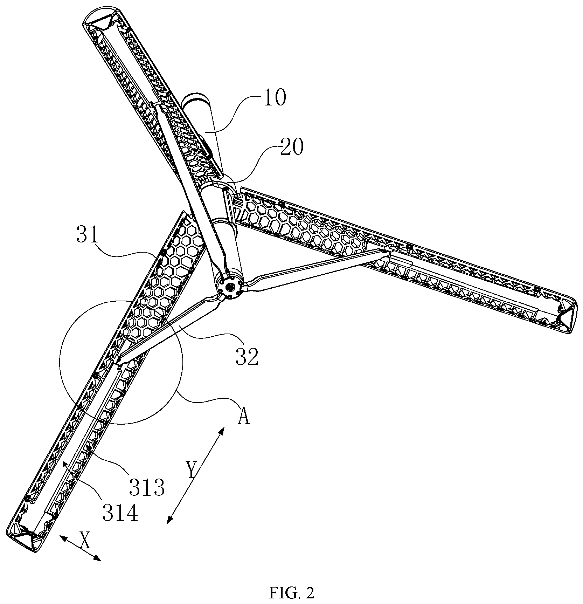

An embodiment of this application provides a support 1000 for auxiliary shooting in scenes including self-shooting, live broadcast, photography, taking pictures, and the like. The support 1000 can be configured to support an electronic device, a light supplementing lamp, a microphone, a mic, and the like in the foregoing scenes. As shown in FIG. 1 to FIG. 5, the support 1000 includes a main rod 10, a supporting foot base 20, and supporting components 30. The supporting foot bases 20 are sleeved on the main rod 10. The supporting component 30 includes a supporting foot 31 and a supporting rib 32. The supporting foot 31 is rotatably connected to the supporting foot base 20. One end of the supporting rib 32 can rotate relative to the main rod 10, and the other end is rotatably connected to the supporting foot 31. One end of the supporting rib 32 is provided with a first rotating shaft 321, and the supporting rib 32 is rotatably connected to the supporting foot 31 through the first rotating shaft 321. The supporting foot 31 includes a first installing part 311 and a second installing part 312 arranged at an interval in a width direction (as shown in an X direction in FIG. 2) of the supporting foot 31. The first installing part 311 includes a first retaining wall 3112 and a second retaining wall 3113. The second installing part 312 includes a third retaining wall 3122 and a fourth retaining wall 3123. The second retaining wall 3113 and the fourth retaining wall 3123 are evenly arranged at an interval in a length direction (as shown in a Y direction in FIG. 2) and the width direction of the supporting foot 31. The first rotating shaft 321 is sandwiched between the second retaining wall 3113 and the fourth retaining wall 3123 in the length direction of the supporting foot 31, the first retaining wall 3112 and the second retaining wall 3113 form, through enclosure, first installation space 3111 at which the first rotating shaft 321 is inserted, and the third retaining wall 3122 and the fourth retaining wall 3123 form, through enclosure, second installation space 3121 at which the first rotating shaft 321 is inserted.

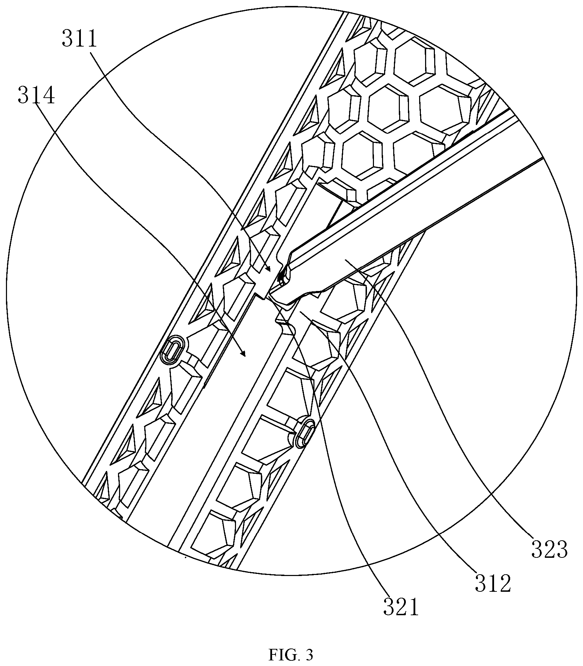

Refer to FIG. 3 to FIG. 5. The first rotating shaft 321 is sandwiched between the second retaining wall 3113 and the fourth retaining wall 3123 in the length direction of the supporting foot 31, so that the first rotating shaft 321 is retained by the second retaining wall 3113 when moving towards a top end of the supporting foot 31 (namely, an end that the supporting foot 31 is rotatably connected to the supporting foot base 20, and the first rotating shaft 321 is retained by the fourth retaining wall 3123 when moving towards a bottom end of the supporting foot 31. Therefore, under the joint action of the second retaining wall 3113 and the fourth retaining wall 3123, the first rotating shaft 321 can be limited in the length direction of the supporting foot 31. It should be learned that, in this embodiment, the second retaining wall 3113 is closer to the top end of the supporting foot 31 relative to the fourth retaining wall 3123, and in another embodiment, positions of the second retaining wall 3113 and the fourth retaining wall 3123 can be replaced with each other. In other words, the fourth retaining wall 3123 is closer to the top end of the supporting foot 31 relative to the second retaining wall 3113 as long as it is ensured that the first rotating shaft 321 is sandwiched between the fourth retaining wall 3123 and the second retaining wall 3113 in the length direction of the supporting foot 31.

Still refer to FIG. 3 to FIG. 5. The first retaining wall 3112 and the second retaining wall 3113 form, through enclosure, the first installation space 3111 at which the first rotating shaft 321 is inserted. In the first installation space 3111, a position of the first rotating shaft 321 is retained by the first retaining wall 3112 and the second retaining wall 3113 separately, to prevent the first rotating shaft 321 from detaching from the first installation space 3111 in directions of the first retaining wall 3112 and the second retaining wall 3113. Similarly, the third retaining wall 3122 and the fourth retaining wall 3123 form, through enclosure, the second installation space 3121 at which the first rotating shaft 321 is inserted. In the second installation space 3121, the position of the first rotating shaft 321 is retained by the third retaining wall 3122 and the fourth retaining wall 3123 separately, to prevent the first rotating shaft 321 from detaching from the second installation space 3121 in directions of the third retaining wall 3122 and the fourth retaining wall 3123. The first rotating shaft 321 is retained and limited by the second retaining wall 3113 and the fourth retaining wall 3123 in the length direction of the supporting foot 31, and is retained and limited in the first installation space 3111 and the second installation space 3121 under the retaining of the first retaining wall 3112 and the third retaining wall 3122, so that when one end of the supporting rib 32 rotated relative to the main rod 10 is fastened or limited, the first rotating shaft 321 can be stably fastened or limited on the supporting foot 31.

Refer to FIG. 1. One end of the supporting rib 32 can rotate relative to the main rod 10 as follows: the end of the supporting rib 32 is rotatably connected to an end of the main rod 10 or a position of the main rod 10 close to the end, or the end of the supporting rib 32 is rotatably connected to a sleeve 40 disposed for the supporting foot base 20 towards the end of the main rod 10. A structure for one end of the supporting rib 32 to rotate relative to the main rod 10 can be achieved in each of the above manner.

In an embodiment, the first retaining wall 3112 and the second retaining wall 3113 are integrally formed and form, through enclosure, the first installation space 3111 at which the first rotating shaft 321 is inserted; and the first retaining wall 3112 and the second retaining wall 3113 are integrally formed, to enhance the structural strength of the first installing part 311 entirely. The third retaining wall 3122 and the fourth retaining wall 3123 may also be integrally formed and form, through enclosure, the second installation space 3121 at which the first rotating shaft 321 is installed. In this embodiment, the second retaining wall 3113 and the fourth retaining wall 3123 are disposed to be in a shape (such as an arc shape) that is matched with an outer contour of the first rotating shaft 321, so that when it is ensured that the first rotating shaft 321 rotates in the first installation space 3111 and the second installation space 3121, the smoothness and stability of rotation of the first rotating shaft 321 are improved.

In an embodiment, the first retaining wall 3112 and the second retaining wall 3113 are arranged at an interval (not shown in the figure), and the first retaining wall 3112 and the second retaining wall 3113 are arranged at an interval less than a diameter of the first rotating shaft 321. To be specific, although the first retaining wall 3112 and the second retaining wall 3113 are arranged at an interval, the interval is not big enough to enable the first rotating shaft 321 to detach from the interval. Therefore, behind the first installation space 3111 at which the first rotating shaft 321 is inserted, the first rotating shaft 321 is retained and limited in directions of both the first retaining wall 3112 and the second retaining wall 3113. Similarly, in other embodiments, the third retaining wall 3122 and the fourth retaining wall 3123 are arranged at an interval, and the interval between the third retaining wall 3122 and the fourth retaining wall 3123 is less than the diameter of the first rotating shaft 321.

Refer to FIG. 2 and FIG. 3. An axial direction of the first rotating shaft 321 is perpendicular to the length direction of the supporting foot 31, so that a structure in which the supporting rib 32 is disposed between the supporting foot 31 and the main rod 10 is more stable and is more easily installed.

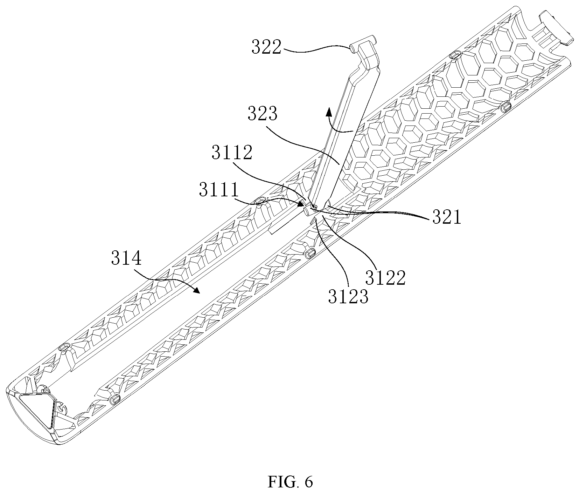

Refer to FIG. 6. The first rotating shaft 321 of the supporting rib 32 is installed on the supporting foot 31 in the following manner: a direction of the supporting rib 32 is adjusted, the first rotating shaft 321 of the supporting rib 32 is axially parallel to or is at an angle with the supporting foot 31 in a length direction, and is then inserted into the interval between the first retaining wall 3112 and the third retaining wall 3122, and then the supporting rib 32 is rotated; when the second retaining wall 3113 is closer to the top end of the supporting foot 31 than the fourth retaining wall 3123, a direction of the supporting rib 32 is rotated clockwise (namely, an arrow direction marked in a body 323 of the supporting rib 32 in FIG. 6); and when the fourth retaining wall 3123 is closer to the top end of the supporting foot 31 relative to the second retaining wall 3113, the direction of the supporting rib 32 is rotated counterclockwise (namely, a direction opposite to the arrow direction marked in the body 323 of the supporting rib 32 in FIG. 6), so that two ends of the first rotating shaft 321 in an axial direction are respectively rotated between the second retaining wall 3113 and the fourth retaining wall 3123. In this case, the first rotating shaft 321 of the supporting rib 32 is installed in place, and the first rotating shaft 321 is retained by the second retaining wall 3113 and the fourth retaining wall 3123 when sliding upward in the length direction of the supporting rib 32. Similarly, the first rotating shaft 321 of the supporting rib 32 is detached from a position at which the supporting foot 31 is rotatably connected in the following manner: when the end of the supporting rib 32 close to the main rod 10 is not fastened, the supporting rib 32 is rotated in a direction opposite to an original installation direction, so that the first rotating shaft 321 of the supporting rib 32 is not retained by the first retaining wall 3112 and the third retaining wall 3122, and the supporting rib 32 can be detached from the supporting foot 31 even if the first rotating shaft 321 of the supporting rib 32 is rotated to the interval between the first retaining wall 3112 and the third retaining wall 3122.

In an embodiment, the supporting rib 32 is made of an elastic material (such as plastic rubber, a plastic material). After one end of the supporting rib 32 is connected to the main rod 10, the supporting rib 32 is twisted within a torsional angle range of the supporting rib 32 to drive the first rotating shaft 321 to be detached from the first installation space 3111 and the second installation space 3121. Therefore, even when the end (namely, the second rotating shaft 322 of the supporting rib 32 in FIG. 6) of the supporting rib 32 close to the main rod 10 is fastened, the supporting rib 32 can still be twisted based on an elastic characteristic of the material, so that the supporting rib 32 can be twisted, and the first rotating shaft 321 of the supporting rib 32 is detached from the supporting foot 31.

Refer to FIG. 2 to FIG. 6. In the length direction (as shown in the Y direction in FIG. 2) of the supporting foot 31, a distance between the second retaining wall 3113 and the fourth retaining wall 3123 is 1 to 1.2 times a diameter of the first rotating shaft 321. When the distance between the second retaining wall 3113 and the fourth retaining wall 3123 is 1 times of the diameter of the first rotating shaft 321, to be specific, this distance is matched with the diameter of the first rotating shaft 321, the first rotating shaft 321 can be sandwiched relatively tightly between the second retaining wall 3113 and the fourth retaining wall 3123. When the distance between the second retaining wall 3113 and the fourth retaining wall 3123 is 1.2 times the diameter of the first rotating shaft 321, to be specific, the first rotating shaft 321 is sandwiched between the second retaining wall 3113 and the fourth retaining wall 3123, and movable space is provided, the first rotating shaft 321 can still be limited to a specific range and is not detached from the supporting foot 31.

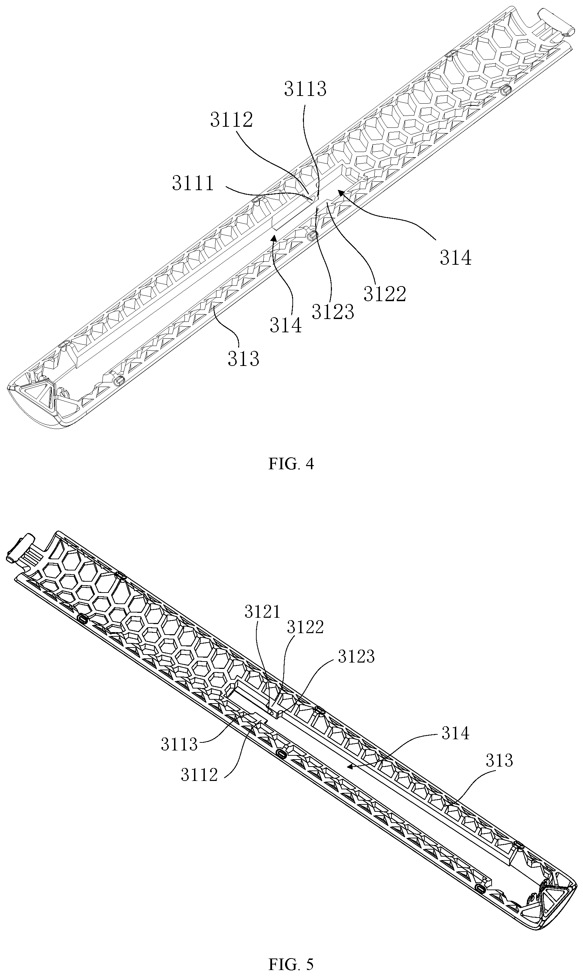

Refer to FIG. 4 and FIG. 5. The supporting foot 31 has an inner side wall 313, the inner side wall 313 is provided with an accommodating groove 314, the supporting rib 32 can be accommodated in the accommodating groove 314, and the first installation space 3111 communicates with the second installation space 3121 and the accommodating groove 314. The supporting rib 32 is accommodated in the accommodating groove 314, to facilitate storage of the whole support and prevent the supporting rib 32 from being exposed after storage. The first installation space 3111 and the second installation space 3121 communicate with the accommodating groove 314. When the first rotating shaft 321 is installed and detached, space in the accommodating groove 314 can be used to facilitate installation and detaching of the first rotating shaft 321. The first retaining wall 3112, the second retaining wall 3113, and a bottom of the accommodating groove 314 form, through enclosure, the first installation space 3111 at which the first rotating shaft 321 is inserted, and the third retaining wall 3122, the fourth retaining wall 3123, and the bottom of the accommodating groove 314 form, through enclosure, the second installation space 3121 at which the first rotating shaft 321 is inserted. Therefore, the supporting rib 32 is more easily installed on the supporting foot 31. The first rotating shaft 321 of the supporting rib 32 can be directly inserted into the first installation space 3111 and the second installation space 3121 through the bottom of the accommodating groove 314.

In one embodiment, the main rod 10 is disposed as a telescopic rod.

An embodiment of this application further provides a shooting auxiliary apparatus, including the support in the above embodiments and an electronic device fastening apparatus (not shown in the figure) connected to the top end of the main rod 10. The electronic device fastening apparatus is configured to secure electronic products such as mobile phones, tablets, and the like.

It should be understood that the above embodiments are only used to illustrate the technical solutions of this application, rather than limiting the technical solutions. For those skilled in the art, the technical solutions recorded in the above embodiments may be modified, or some of the technical features can be equivalently replaced. All such modifications and replacements shall fall within the scope of protection of the claims attached to this application.

## Claims

1. A support, comprising:
a main rod (10);
a supporting foot base (20), sleeved on the main rod (10); and
a supporting component (30), comprising a supporting foot (31) and a supporting rib (32), wherein the supporting foot (31) is rotatably connected to the supporting foot base (20), one end of the supporting rib (32) is capable of rotating relative to the main rod (10), the other end is rotatably connected to the supporting foot (31), one end of the supporting rib (32) is provided with a first rotating shaft (321), the supporting rib (32) is rotatably connected to the supporting foot (31) through the first rotating shaft (321), the supporting foot (31) comprises a first installing part (311) and a second installing part (312) arranged at an interval in a width direction of the supporting foot (31), the first installing part (311) comprises a first retaining wall (3112) and a second retaining wall (3113), the second installing part (312) comprises a third retaining wall (3122) and a fourth retaining wall (3123), the second retaining wall (3113) and the fourth retaining wall (3123) are evenly arranged at an interval in a length direction and the width direction of the supporting foot (31), the first rotating shaft (321) is sandwiched between the second retaining wall (3113) and the fourth retaining wall (3123) in the length direction of the supporting foot, the first retaining wall (3112) and the second retaining wall (3113) form, through enclosure, first installation space (3111) at which the first rotating shaft (321) is inserted, and the third retaining wall (3122) and the fourth retaining wall (3123) form, through enclosure, second installation space (3121) at which the first rotating shaft (321) is inserted.

2. The support according to claim 1, wherein the first retaining wall (3112) and the second retaining wall (3113) are integrally formed, and/or the third retaining wall (3122) and the fourth retaining wall (3123) are integrally formed.

3. The support according to claim 2, wherein the second retaining wall (3113) and the fourth retaining wall (3123) are disposed to be in a shape that is matched with an outer side profile of the first rotating shaft (321).

4. The support according to claim 1, wherein the first retaining wall (3112) and the second retaining wall (3113) are arranged at an interval, and the interval between the first retaining wall (3112) and the second retaining wall (3113) is less than a diameter of the first rotating shaft (321); and/or the third retaining wall (3122) and the fourth retaining wall (3123) are arranged at an interval, and the interval between the third retaining wall (3122) and the fourth retaining wall (3123) is less than the diameter of the first rotating shaft (321).

5. The support according to any one of claims 1 to 4, wherein when the first rotating shaft (321) is sandwiched between the second retaining wall (3113) and the fourth retaining wall (3123) in the length direction of the supporting foot, an axial direction of the first rotating shaft (321) is perpendicular to the length direction of the supporting foot (31).

6. The support according to any one of claims 1 to 5, wherein an interval between the second retaining wall (3113) and the fourth retaining wall (3123) in the length direction of the supporting foot is 1 to 1.2 times a diameter of the first rotating shaft (321).

7. The support according to any one of claims 1 to 6, wherein the supporting rib (32) is made of an elastic material, after one end of the supporting rib (32) is connected to the main rod (10), the supporting rib (32) is twisted within a torsional angle range of the supporting rib (32) to drive the first rotating shaft (321) to be detached from the first installation space (3111) and the second installation space (3121).

8. The support according to any one of claims 1 to 7, wherein the supporting foot (31) is provided with an accommodating groove (314), the supporting rib (32) is capable of being accommodated in the accommodating groove (314), and the first installation space (3111) and the second installation space (3121) communicate with the accommodating groove (314).

9. The support according to claim 8, wherein the first retaining wall (3112), the second retaining wall (3113), and a bottom of the accommodating groove (314) form, through enclosure, the first installation space (3111) at which the first rotating shaft (321) is inserted, and the third retaining wall (3122), the fourth retaining wall (3123), and the bottom of the accommodating groove (314) form, through enclosure, the second installation space (3121) at which the first rotating shaft (321) is inserted.

10. A shooting auxiliary apparatus, comprising the support according to any one of claims 1 to 9 and an electronic device fastening apparatus that is connected to a top end of the main rod (10).
